# EUROPÄISCHE PATENTSCHRIFT

(11) **EP 1 627 350 B1**
(45) Veröffentlichungstag und Bekanntmachung des Hinweises auf die Patenterteilung: **29.07.2015**
(21) Anmeldenummer: 04711564.7
(22) Anmeldetag: 17.02.2004
(51) Int. Cl.: G06Q 10/00, H04L 29/08

(54) **VERFAHREN UND SYSTEM ZUM DURCHFÜHREN VON TRANSAKTIONEN ZWISCHEN EINHEITEN IN EINEM NETZWERK**
METHOD AND SYSTEM FOR CARRYING OUT TRANSACTIONS BETWEEN UNITS IN A NETWORK
PROCEDE ET SYSTEME POUR MENER DES TRANSACTIONS ENTRE DES UNITES DANS UN RESEAU

(30) Priorität: 26.05.2003 DE 10323904
(43) Veröffentlichungstag der Anmeldung: 22.02.2006
(73) Patentinhaber: Vodafone GmbH, 40549 Düsseldorf (DE)
(72) Erfinder: BARKER,, Dr. Ronald, 81379 München (DE)
(74) Vertreter: Müller, Thomas
(86) Internationale Anmeldenummer: PCT/DE2004/000292
(87) Internationale Veröffentlichungsnummer: WO 2004/111894

(56) Entgegenhaltungen:
- WO-A-01/65334
- US-A1- 2002 184 304
- US-A1- 2003 028 621
- US-A1- 2003 220 835
- ETSI 3GPP: "3rd Generation Partnership Project; Technical Specifications Group Services and System Aspects; Location Services (LCS); Service Description; Stage 1 (Release 6)" 3GPP TS22.071 V6.3.0, März 2003 (2003-03), Seiten 1-49, XP002288237

## Beschreibung

Die vorliegende Erfindung betrifft zunächst ein Verfahren zum Durchführen von Transaktionen zwischen Einheiten in einem Netzwerk gemäß dem Oberbegriff von Patentanspruch 1. Weiterhin betrifft die Erfindung ein System zum Durchführen von Transaktionen zwischen Einheiten in einem Netzwerk gemäß dem Oberbegriff von Patentanspruch 15.

Ein Verfahren für Transaktionen wird z.B. in US 2003/028621 A1 offenbart.

In jüngster Zeit haben die Betreiber mobiler Netzwerke (Mobile Network Operators-MNOS) sehr stark in die nächste Generation der Mobil-Telefon-Infrastruktur investiert, die allgemein als UMTS (Universal Mobile Telekommunications System) bekannt ist (CDMA 2000 in den USA). Das UMTS-Netz stellt das Breitband-Frequenzspektrum zur Verfügung, welches notwendig ist, um paketorientierte Services zu unterstützen. Derartige Services sind grundsätzlich IP-basiert ausgelegt, was bedeutet, dass diese Services unter einem Internetprotokoll laufen. Derzeit finden in einem Mobilfunknetz sämtliche Services leitungsvermittelt statt (circuit switched). Der Übergang von solchen Services - basierend auf leitungsvermittelter Datenübertragung - hin zu paketorientierten Services (IP-basierten Services) ist derzeit Grundlage intensiver Forschungen.

IP-basierte Services funktionieren per se nach dem Konzept der peer-to-peer-Verbindungen. Jede Einheit (im Allgemeinen wird von einem Computer ausgegangen) verfügt über eine ihr zugeordnete, einzigartige Internetadresse, über die jede Einheit identifizierbar ist. Über diese einzigartige Internetadresse ist jede Einheit von jeder anderen Einheit erreichbar, beispielsweise zugänglich, adressierbar oder zu Kommunikationszwecken kontaktierbar. Dieses ursprüngliche Internetkonzept auf der Basis der peer-to-peer-Struktur ist jedoch zugunsten eines anderen Konzepts aufgegeben worden, welches als Client-Server-Konzept beziehungsweise Master-Slave-Konzept bekannt ist. Bei diesem Konzept sind die als Client fungierenden Einheiten nicht fähig, frei und unabhängig andere Einheiten in dem Netzwerk, beispielsweise andere Computer im Internet, zu adressieren beziehungsweise zu kontaktieren. Der Grund für die Verwendung eines solchen Client-Server-Systems hat unter anderem sicherheitstechnische Aspekte. So sind große zusammenhängende Netzwerke sehr leicht der Gefahr ausgesetzt, dass sie von außen, dass heißt von unberechtigten Dritten, attackiert werden können, in dem diese sich unerlaubter Weise Zugang zu dem Netzwerk verschaffen. Ebenso ist es zur Zeit einfacher, IP-basierte Datenpakete über ein Client-Server-System in einem Netzwerk zu verteilen.

Die Betreiber von Mobilfunknetzen haben jedoch das Bedürfnis, IP-basierte Services anzubieten. Dies wird derzeit mittels des General-Packet-Radio-Service (GPRS) erreicht. Diese IP-Services sind jedoch nach wie vor vollständig Client-Server basiert. Dies ist jedoch von Nachteil. Bei den bisher existierenden Client-Server-Systemen ist es nicht möglich, eine direkte Kommunikation zwischen zwei Einheiten zu etablieren, wie dies bei Peer-To-Peer-Systemen möglich ist.

Ausgehend hiervon liegt der vorliegenden Erfindung die Aufgabe zugrunde, ein Verfahren sowie ein System zum Durchführen von Transaktionen zwischen Einheiten in einem Netzwerk bereitzustellen, mit dem auf einfache und dennoch sichere Weise eine direkte Kommunikation zwischen zwei oder mehr Einheiten innerhalb des Netzwerks zur Durchführung von Transaktionen möglich ist.

Diese Aufgabe wird erfindungsgemäß gelöst durch das Verfahren mit den Merkmalen gemäß dem unabhängigen Patentanspruch 1 sowie das System mit den Merkmalen gemäß dem unabhängigen Patentanspruch 15. Weitere Vorteile, Merkmale, Details, Aspekte und Effekte der Erfindung ergeben sich aus den Unteransprüchen sowie der Beschreibung. Dabei gelten Merkmale und Details, die im Zusammenhang mit dem erfindungsgemäßem Verfahren beschrieben sind, selbstverständlich auch im Zusammenhang mit dem erfindungsgemäßen System, und jeweils umgekehrt.

Gemäß dem ersten Aspekt der Erfindung wird ein Verfahren zum Durchführen von Transaktionen zwischen Einheiten in einem Netzwerk bereitgestellt, wobei zumindest ein Bestandteil des Netzwerks durch das Internet gebildet wird und wobei wenigstens eine Einheit als Transaktions-Gebereinheit und wenigstens eine Einheit als Transaktions-Nehmereinheit ausgebildet ist. Erfindungsgemäß ist das Verfahren dadurch gekennzeichnet, dass über das Netzwerk eine direkte Kommunikation zwischen der Transaktions-Gebereinheit und der Transaktions-Nehmereinheit erfolgt. Zu diesem Zweck ist vorgesehen, dass über ein Standort-Ermittlungsverfahren Positionsdaten der Transaktions-Gebereinheit automatisch erzeugt und elektronisch mit der Transaktions-Gebereinheit eindeutig zugeordneten Adressdaten, die zumindest eine Internetadresse umfassen, zu einer die Transaktions-Gebereinheit eindeutig identifizierenden Transaktions-Geberdatei verknüpft werden, dass die Transaktions-Geberdateien aller Transaktions-Gebereinheiten elektronisch in einer Zentraldatei abgespeichert werden, dass zur Einleitung einer Transaktionen über ein Standort-Ermittlungsverfahren Positionsdaten der Transaktions-Nehmereinheit automatisch erzeugt werden, dass die Positionsdaten der Transaktions-Nehmereinheit elektronisch mit den Transaktions-Geberdateien aus der Zentraldatei verglichen werden, dass die Adressdaten einer oder mehrerer Transaktions-Gebereinheit(en), die eine Übereinstimmung ihrer Positionsdaten mit den Positionsdaten der Transaktions-Nehmereinheit aufweist/aufweisen oder sich zumindest in einem definierten Umgebungsbereich zur Position der Transaktions-Nehmereinheit befindet/befinden, automatisch über die Transaktions-Nehmereinheit aktivierbar ist/sind oder aktiviert wird/werden und dass bei Aktivierung von Adressdaten einer Transaktions-Gebereinheit in der Transaktions-Nehmereinheit zur Durchführung einer Transaktion über das Netzwerk automatisch eine direkte Kommunikationsverbindung zwischen der Transaktions-Gebereinheit und der Transaktions-Nehmereinheit hergestellt wird.

Mit dem erfindungsgemäßen Verfahren wird es nunmehr möglich, eine direkte Kommunikation zwischen einer Transaktions-Gebereinheit und einer Transaktions-Nehmereinheit zu etablieren, sodass Transaktionen zwischen diesen Einheiten einfach, schnell, sicher und ohne Aufwand für den Nutzer durchgeführt werden können.

Folglich können nunmehr Transaktionen auch in solchen Situationen durchgeführt werden, in denen eine Interaktion mit einer anderen Partei in Echtzeit stattfinden soll. Solche Verfahren waren insbesondere in Mobilfunknetzen bisher nicht möglich. Nunmehr können mit dem erfindungsgemäßen Verfahren IP-basierte Services durchgeführt werden, wobei alle Services mobil erzeugt (originated) und mobil beendet (terminated) werden.

Mit dem erfindungsgemäßen Verfahren können insbesondere die nachfolgend beschriebenen Bedingungen erfüllt werden. Zunächst sind die an der Transaktion beteiligten Einheiten, nämlich die Transaktions-Gebereinheit und die Transaktions-Nehmereinheit global adressierbar. Weiterhin sind die Einheiten absolut korrekt und unzweifelhaft identifizierbar. Weiterhin ist eine Echtzeit Verifizierung der Transaktion möglich. Dabei kann die erforderliche Nutzer-Interaktion so gering wie möglich gehalten werden.

Das erfindungsgemäße Verfahren sieht zunächst vor, dass Transaktionen zwischen Einheiten in einem Netzwerk durchgeführt werden sollen, wobei zumindest ein Bestandteil des Netzwerks durch das Internet gebildet wird und wobei wenigstens eine Einheit als Transaktions-Gebereinheit und wenigstens eine Einheit als Transaktions-Nehmereinheit ausgebildet ist.

Eine Transaktion erfordert in der Regel wenigstens zwei Einheiten. Unter einer "Transaktion" wird im Lichte der vorliegenden Beschreibung generell eine in sich abgeschlossene Aktivität zwischen zwei oder mehr Einheiten innerhalb eines Netzwerks verstanden. Dabei ist die Erfindung nicht auf bestimmte Transaktionsarten beschränkt. Beispielsweise kann es sich bei einer Transaktion um eine Verkaufshandlung handeln, wobei ein Teilnehmer an der Transaktion eine Ware oder eine Dienstleistung gegen Bezahlung eines Geldpreises an einen anderen Teilnehmer der Transaktion weitergibt. Ein solches Beispiel wird im weiteren Verlauf der Beschreibung näher erläutert, ohne dass die Erfindung auf dieses Beispiel beschränkt wäre.

Denn selbstverständlich sind auch andere Arten von Transaktionen denkbar. So ist es beispielsweise möglich, dass über die Transaktion eine bestimmte Tätigkeit in Gang gesetzt oder ausgeführt wird. Beispielsweise ist es denkbar, dass die Transaktion darin besteht, eine bestimmte Vorrichtung in Gang zu setzen, beispielsweise ein Garagentor zu öffnen und zu schließen oder dergleichen. Ebenso ist es denkbar, dass unter einer Transaktion das Ablesen von Sensorelementen oder das Auswerten von über einem Sensorelement gemessenen Werten verstanden werden kann. Auch ist es denkbar, dass über eine entsprechende Transaktion Wartungstätigkeiten an Einrichtungen und Gerätschaften, die in einem solchen Fall mit einer Transaktions-Gebereinheit verbunden sind oder eine solche umfassen, durchgeführt werden können. Das erfindungsgemäße Verfahren ist auf vielfältige Weise für die unterschiedlichsten Anwendungsarten einsetzbar.

Gemäß dem vorliegenden Verfahren läuft dieses zwischen wenigstens einer Transaktions-Gebereinheit und wenigstens einer Transaktions-Nehmereinheit ab. Bei einer "Transaktions-Nehmereinheit", handelt es sich generell um eine Einheit, die eine bestimmte Aktivität durchzuführen beziehungsweise zu initiieren beabsichtigt. Bei einer "Transaktions-Gebereinheit" handelt es sich um eine Einheit, die im Rahmen der durchzuführenden Aktivität das Pendant zur Transaktions-Nehmereinheit darstellt.

Erfindungsgemäß ist vorgesehen, dass das Verfahren in einem Netzwerk stattfindet. Ein solches Netzwerk kann auch aus diversen Teilnetzen bestehen, die zumindest zeitweilig und/oder zumindest bereichsweise miteinander agieren. Ein Teil des Netzwerkes stellt dabei das Internet dar. Bei einem anderen Teilnetz des Netzwerks kann es sich beispielsweise um ein Mobilfunknetz handeln, wobei dieses Mobilfunknetz insbesondere als UMTS-Netz ausgebildet sein kann. In diesem Fall laufen zumindest einzelne Schritte des Transaktionsverfahrens über das Mobilfunknetz ab.

Wenn ein Teilnetz des Netzwerks als UMTS-Netz ausgebildet ist, verfügt ein solches Netz über eine Kontrollebene, mittels derer eine Einheit-Zu-Einheit-Direktsteuerung und damit eine Peer-To-Peer-Verbindung möglich wird.

Besonders bevorzugt umfasst das Netzwerk daher eine Mobilfunknetzkomponente sowie eine Internetkomponente.

Erfindungsgemäß ist nunmehr vorgesehen, dass eine direkte Kommunikation zwischen der Transaktions-Gebereinheit und der Transaktions-Nehmereinheit erfolgt. Dazu ist zunächst vorgesehen, dass über ein Standort-Ermittlungsverfahren Positionsdaten der Transaktions-Gebereinheit automatisch erzeugt und elektronisch mit der Transaktions-Gebereinheit eindeutig zugeordneten Adressdaten zu einer die Transaktions-Gebereinheit eindeutig identifizierenden Transaktions-Gebereinheit verknüpft werden. Die der Transaktions-Gebereinheit zugeordneten Adressdaten umfassen dabei zumindest auch eine Internetadresse. Selbstverständlich kann vorgesehen sein, dass die Adressdaten auch noch andere Datentypen umfassen.

Bei diesem grundlegenden Verfahrensschritt geht es also darum, eine Datei zu schaffen, die die Transaktions-Gebereinheit eindeutig und unzweifelhaft identifiziert. Dies wird zum einen über individuelle Adressdaten der Transaktions-Gebereinheit erreicht. Zum anderen werden diese Adressdaten mit Positionsdaten verknüpft. Dabei ist die Erfindung nicht auf bestimmte Verfahren beschränkt, wie diese Positionsdaten ermittelt beziehungsweise erzeugt werden können. Im weiteren Verlauf der Beschreibung werden einige nicht ausschließliche Beispiele für geeignete Standort-Ermittlungsverfahren beschrieben.

Die auf diese Weise entstandenen Transaktions-Geberdateien aller Transaktions-Gebereinheiten werden elektronisch in einer Zentraldatei abgespeichert. Auf diese Weise sind die Daten aller Transaktions-Gebereinheiten auf einfache Weise abrufbar. Dabei ist die Erfindung jedoch nicht auf bestimmte Orte beschränkt, wo die Zentraldatei abgespeichert wird. Dies ergibt sich vielmehr je nach den vorherrschenden Gegebenheiten.

Beispielsweise ist es denkbar, dass das Netzwerk wenigstens eine zentrale Rechnereinheit aufweist (eine sogenannte Servereinheit), wobei die Zentraldatei in der zentralen Rechnereinheit abgespeichert wird. In anderer Ausgestaltung ist es auch denkbar, dass die Zentraldatei in einer Rechnereinheit innerhalb der Transaktions-Nehmereinheit abgespeichert wird.

Zur Einleitung einer Transaktion ist erfindungsgemäß vorgesehen, dass über ein Standort-Ermittlungsverfahren Positionsdaten der Transaktions-Nehmereinheit automatisch erzeugt werden, die anschließend elektronisch mit den Transaktions-Geberdateien aus der Zentraldatei verglichen werden.

Wenn nun eine Übereinstimmung der Positionsdaten einer Transaktions-Gebereinheit mit den Positionsdaten einer Transaktions-Nehmereinheit auftritt oder aber wenn sich eine Transaktions-Gebereinheit zumindest in einem definierten Umgebungsbereich zur Position der Transaktions-Nehmereinheit befindet, werden die Adressdaten solcher Transaktions-Gebereinheiten, die eine entsprechende Übereinstimmung aufweisen, automatisch aktiviert.

Vorteilhaft kann vorgesehen sein, dass die Adressdaten einer oder mehrerer Transaktions-Gebereinheit(en), die eine Übereinstimmung ihrer Positionsdaten mit den Positionsdaten der Transaktions-Nehmereinheit aufweist/aufweisen oder sich zumindest in einem definierten Umgebungsbereich zur Position der Transaktions-Nehmereinheit befindet/befinden, automatisch auf der Transaktions-Nehmereinheit anzeigbar ist/sind oder angezeigt wird/werden.

Wenn sich eine Transaktions-Nehmereinheit beispielsweise einer Transaktions-Gebereinheit nähert, die Adressdaten dieser Transaktions-Gebereinheit automatisch auf die Transaktions-Nehmereinheit übertragen werden, sobald die Transaktions-Nehmereinheit eine bestimmte Nähe zur Transaktions-Gebereinheit erreicht hat.

Sobald die Adressdaten der Transaktions-Gebereinheit auf der Transaktions-Nehmereinheit angezeigt und aktiviert worden sind, wird zur Durchführung einer Transaktion über das Netzwerk automatisch eine direkte Kommunikationsverbindung zwischen der Transaktions-Gebereinheit und der Transaktions-Nehmereinheit hergestellt. Dies kann auf unterschiedlichste Art und Weise erfolgen, sodass die Erfindung nicht auf den Aufbau bestimmter Kommunikationsverbindungen beschränkt ist. Wenn es sich bei der Transaktion beispielsweise um eine Verkaufshandlung handelt, kann von der Transaktions-Gebereinheit nach Aufbau der Kommunikationsverbindung beispielsweise ein Angebot auf die Transaktions-Nehmereinheit übertragen werden. Ebenso ist es denkbar, dass nach Herstellung der Kommunikationsverbindung von der Transaktions-Nehmereinheit ein Ausführungsbefehl auf die Transaktions-Gebereinheit übertragen wird, beispielsweise um ein Garagentor zu öffnen oder dergleichen. Auch ist es denkbar, dass nach Herstellung der direkten Kommunikationsverbindung Informationsdaten in Form von Signalwerten oder dergleichen von der Transaktions-Gebereinheit zur Transaktions-Nehmereinheit übertragen werden. Dies kann beispielsweise dann geschehen, wenn Sensorelemente abgelesen werden sollen oder dergleichen.

Wie weiter oben bereits ausgeführt wurde, kann das Netzwerk beispielsweise wenigstens eine zentrale Rechnereinheit aufweisen, wobei die Zentraldatei in der zentralen Rechnereinheit abgespeichert sein kann. In einem solchen Fall können die Positionsdaten der Transaktions-Nehmereinheit zur zentralen Rechnereinheit übertragen und dort elektronisch mit den Transaktions-Geberdateien aus der Zentraldatei verglichen werden. Adressdaten solcher Transaktions-Gebereinheiten, die eine Übereinstimmung ihrer Positionsdaten mit den Positionsdaten der Transaktions-Nehmereinheit aufweisen oder die sich zumindest in einem definierten Umgebungsbereich zur Position der Transaktions-Nehmereinheit befinden, werden dann automatisch auf die Transaktions-Nehmereinheit übertragen und dort angezeigt. In einem solchen Fall kann es sich bei der zentralen Rechnereinheit beispielsweise um eine Servereinheit handeln, die dem Netzbetreiber oder dem Betreiber eines Teilnetzes zugeordnet ist. Wenn es sich bei einem Teilbereich des Netzwerks um ein Mobilfunknetz handelt, kann die zentrale Rechnereinheit beispielsweise dem Mobilfunknetzbetreiber zugeordnet sein. Dieser hat dann die Möglichkeit, seinen Kunden die Durchführung von Transaktionen als besonderen Dienst anzubieten.

In anderer Ausgestaltung kann vorgesehen sein, dass die Zentraldatei in einer Rechnereinheit innerhalb der Transaktions-Nehmereinheit abgespeichert wird. In einem solchen Fall werden die Positionsdaten der Transaktions-Nehmereinheit in dieser Rechnereinheit mit den Transaktions-Geberdateien bzw. den Positionsdaten der Transaktions-Gebereinheit en aus der Zentraldatei verglichen. Wenn eine Übereinstimmung der Positionsdaten auftritt oder aber wenn sich die Transaktions-Nehmereinheit zumindest in einem definierten Umgebungsbereich zur Position der Transaktions-Nehmereinheit befindet, werden die Adressdaten solcher Transaktions-Gebereinheiten automatisch auf der Transaktions-Nehmereinheit angezeigt. In diesem Fall weisen die Transaktions-Nehmereinheiten vorzugsweise besondere Mitteln auf, die einen Zugang zu dem vom Netzwerkbetreiber angebotenen Transaktionsverfahrens ermöglichen. Bei solchen Mittel kann es sich beispielsweise um geeignete Programmmittel oder dergleichen handeln.

Vorteilhaft ist vorgesehen, dass auch der Transaktions-Nehmereinheit Adressdaten eindeutig zugeordnet sind und dass nach Herstellung einer direkten Kommunikationsverbindung Informationsdaten von der Transaktions-Gebereinheit automatisch an die Adressdaten der Transaktions-Nehmereinheit übertragen werden. Bei den Adressdaten kann es sich beispielsweise um eine Telefonnummer zum Übertragen von SMS-Nachrichten oder dergleichen handeln. Ebenso können die Adressdaten - wie weiter oben im Zusammenhang mit der Transaktions-Gebereinheit bereits beschrieben wurde - wenigstens eine Internetadresse umfassen.

Vorteilhaft kann vorgesehen sein, dass die Informationsdaten von der Transaktions-Gebereinheit in Form einer Webseite auf die Transaktions-Nehmereinheit übertragen werden.

In weiterer Ausgestaltung kann vorgesehen sein, dass die Adressdaten solcher Transaktions-Gebereinheiten, die eine Übereinstimmung ihrer Positionsdaten mit den Positionsdaten der Transaktions-Nehmereinheit aufweisen oder sich zumindest in einem definierten Umgebungsbereich zur Position der Transaktions-Nehmereinheit befinden, in Form einer Webseite auf der Transaktions-Nehmereinheit angezeigt werden.

In den vorbeschriebenen Fällen ist es besonders vorteilhaft, wenn die Adressdaten der Transaktions-Nehmereinheit eine Internetadresse umfassen.

Insbesondere ist es vorteilhaft, dass die von den Adressdaten der Transaktions-Gebereinheit und/oder der Transaktions-Nehmereinheit umfassten Internetadressen als Internetadressen nach dem IPv6-Standard ausgebildet sind. Dieser IPv6-Standard ermöglicht, dass jede Einheit über eine eigene, persönliche und einzigartige Internetadresse verfügen kann. Wenn das Netzwerk beispielsweise das UMTS-Netz umfasst, sind diese Internetadressen im Netz bereits inhärent berücksichtigt.

Bei dem Internetprotokoll IPv6 handelt es sich um ein Transportprotokoll, dass einzelne Pakete durch ein Netzwerk transportiert. Jedes Datenpaket wird dabei im Prinzip völlig unabhängig von Vorgängern oder Nachfolgern durch das Netz übermittelt. Das IPv6-Protokoll verfügt über 128bit lange Adressen, was bedeutet, dass eine ungeahnte Menge an IP-Adressen erhältlich sein wird.

Vorzugsweise kann vorgesehen sein, dass die Transaktions-Gebereinheit und/oder die Transaktions-Nehmereinheit Mittel zum Verschlüsseln und/oder Entschlüsseln von Daten aufweist und dass während einer Kommunikationsprozedur zwischen der Transaktions-Gebereinheit und der Transaktions-Nehmereinheit zumindest Teile von Transaktionsdaten zumindest zeitweilig verschlüsselt übertragen werden. Auf diese Weise wird eine sichere Kommunikation beziehungsweise ein sicherer Austausch von Daten gewährleistet, ohne dass Unbefugte auf diese Daten beziehungsweise den Datenaustausch Zugriff nehmen könnten.

In weiterer Ausgestaltung kann vorgesehen sein, dass von der Transaktions-Nehmereinheit und/oder von der Transaktions-Gebereinheit erzeugte Transaktionsdaten innerhalb einer Authentifizierungsinstanz elektronisch verifiziert werden. Die Authentifizierungsinstanz hat insbesondere die Aufgabe zu prüfen, dass es sich bei einer die Transaktionsdaten übertragenden Einheit auch tatsächlich um diejenige Einheit handelt, für die sich diese ausgibt. Derartige Authentifizierungsinstanzen beziehungsweise das Authentifizieren und elektronische Verifizieren von Informationsdaten ist an sich bereits bekannt. Aus diesem Grund ist die Erfindung nicht auf bestimmte Ausgestaltungsformen für die Authentifizierungsinstanz beschränkt.

Beispielsweise kann vorgesehen sein, dass die Authentifizierungsinstanz Bestandteil des Netzwerks ist, wobei die Transaktionsdaten von der Transaktions-Nehmereinheit über das Netzwerk an die Authentifizierungsinstanz übertragen und dort verifiziert werden und dass die verifizierten Transaktionsdaten von der Authentifizierungsinstanz anschließend zur Transaktions-Gebereinheit übertragen werden. Natürlich können auf die gleiche Weise auch Daten, die von der Transaktions-Gebereinheit an die Transaktions-Nehmereinheit übertragen werden, verifiziert werden. In anderer Ausgestaltung ist denkbar, dass die Authentifizierungsinstanz Bestandteil der Transaktions-Gebereinheit ist und dass die Transaktionsdaten von der Transaktions-Nehmereinheit über das Netzwerk an die Authentifizierungsinstanz übertragen und dort verifiziert werden.

Gemäß dem zweiten Aspekt der Erfindung wird ein System zum Durchführen von Transaktionen zwischen Einheiten in einem Netzwerk bereitgestellt, wobei zumindest ein Bestandteil des Netzwerks durch das Internet gebildet ist und wobei wenigstens eine Einheit als Transaktions-Gebereinheit und wenigstens eine Einheit als Transaktions-Nehmereinheit ausgebildet ist. Das System ist erfindungsgemäß dadurch gekennzeichnet, dass es Mittel zur Durchführung des wie vorstehend beschriebenen erfindungsgemäßen Verfahrens aufweist.

Insbesondere ist vorgesehen, dass ein Bestandteil des Netzwerks als Mobilfunknetz, insbesondere als UMTS-Netz ausgebildet ist.

Vorteilhaft ist vorgesehen, dass zumindest eine Transaktions-Gebereinheit als stationäre Einheit ausgebildet ist. Es ist jedoch auch möglich, dass zumindest eine Transaktions-Gebereinheit als mobile Einheit ausgebildet ist. Grundlage ist ja, dass die Positionsdaten der Transaktions-Gebereinheit mit deren Adressdaten verknüpft werden. Wenn das Standort-Ermittlungsverfahren so ausgelegt ist, dass es die Position mobiler Einheiten bestimmen kann, können die Transaktions-Gebereinheiten auch mobil ausgebildet sein.

Vorteilhaft kann zumindest eine Transaktions-Nehmereinheit als mobile Einheit ausgebildet sein. Dabei ist die Erfindung nicht auf bestimmte Typen von mobilen Einheiten beschränkt. Beispielsweise kann es sich bei der Transaktions-Nehmereinheit um einen transportablen Computer, beispielsweise einen Laptop, einen Personal Digital Assistent (PDA) oder dergleichen handeln. Wenn das Netzwerk auch ein Mobilfunknetz umfasst, kann es sich bei der mobilen Einheit vorzugsweise auch um ein Mobiltelefon handeln.

Vorteilhaft kann das Netzwerk wenigstens eine zentrale Rechnereinheit aufweisen. In einer solchen zentralen Rechnereinheit, die beispielsweise als Servereinheit ausgebildet sein kann, kann beispielsweise dann die Zentraldatei abgelegt sein. In weiterer Ausgestaltung ist denkbar, dass die Transaktions-Nehmereinheit und die Transaktions-Gebereinheit eine Rechnereinheit aufweisen. Über diese Rechnereinheit können alle die Transaktion betreffenden Prozesse ablaufen. Insbesondere ist auch denkbar, dass auf einer solchen Rechnereinheit die Zentraldatei abgelegt ist.

Vorzugsweise kann vorgesehen sein, dass die Transaktions-Nehmereinheit und/oder die Transaktions-Gebereinheit Mittel zur Ortsbestimmung der Einheit aufweist. Dabei ist die Erfindung nicht auf bestimmte Mittel zur Ortsbestimmung beschränkt. Wichtig ist lediglich, dass über die Mittel ein Standort-Ermittlungsverfahren durchgeführt werden kann, mittels dessen Positionsdaten der Transaktions-Gebereinheit und/oder der Transaktions-Nehmereinheit erzeugt werden können. Einige nicht ausschließliche Beispiele für geeignete Mittel zur Ortsbestimmung werden nachfolgend beschrieben. So ist es etwa denkbar, dass die Mittel zur Ortsbestimmung ein terrestrisches Modul und/oder ein Funk-Modul umfassen.

Bei Einsatz eines terrestrischen Moduls ist es beispielsweise möglich, die Positionsdaten der Einheiten mittels eines satellitengestützten basierten Standort-Ermittlungsverfahrens (etwa GPS) zu ermitteln.

Zur Ortsbestimmung mittels eines Funk-Moduls kann beispielsweise auf ein System beziehungsweise Verfahren zur Ortung mobiler Endgeräte zurückgegriffen werden. Diesbezüglich sind bereits verschiedene Lösungen bekannt geworden. So ist in der DE 198 03 960, deren Offenbarungsgehalt insoweit in die Beschreibung der vorliegenden Erfindung mit einbezogen wird, ein Verfahren und System zur Nutzung von modernen Ortungssystemen in Mobilfunksystemen beschrieben. Die Ortung eines Mobiltelefons kann beispielsweise auch nach dem sogenannten EOTD-Verfahren (Enhanced Observed Time Difference) erfolgen. Dabei werden Laufzeitunterschiede von Signalen eines Mobiltelefons zu mehreren Sendern gemessen. Aus den ermittelten Werten kann dann unter Verwendung geeigneter Algorithmen automatisch der Standort des Mobiltelefons ermittelt werden.

Vorzugsweise kann dabei vorgesehen sein, dass die zentrale Rechnereinheit Mittel zur Ortsbestimmung der Transaktions-Nehmereinheit und/oder der Transaktions-Gebereinheit aufweist.

Besonders bevorzugt ist vorgesehen, dass die Transaktions-Gebereinheit und die Transaktions-Nehmereinheit Mittel aufweisen, die das Internetprotokoll IPv6 unterstützen.

Weiterhin kann vorgesehen sein, dass die Transaktions-Gebereinheit und die Transaktions-Nehmereinheit jeweils ein Kommunikationsmodul aufweisen, das für einen direkten Zugang zum Internet ausgebildet ist. Hierbei kann es sich insbesondere um ein Modul handeln, das den drahtlosen Zugang zum Internet unterstützt, beispielsweise WLAN, GSM, GPRS und/oder UMTS.

In weiterer Ausgestaltung kann vorgesehen sein, dass im Netzwerk wenigstens eine Authentifizierungsinstanz vorgesehen ist und dass die Authentifizierungsinstanz zum verifizieren von übertragenen Transaktionen ausgebildet ist. Dabei kann beispielsweise vorgesehen sein, dass die Authentifizierungsinstanz im Netzwerk als eigenständiges Bauteil ausgebildet ist. Ebenso ist es denkbar, dass die Authentifizierungsinstanz als Bestandteil der Transaktions-Nehmereinheit und/oder der Transaktions-Gebereinheit ausgebildet ist.

Vorteilhafterweise können die Transaktions-Gebereinheit und die Transaktions-Nehmereinheit Mittel zum Verschlüsseln und/oder Entschlüsseln von Daten aufweisen. Hierbei kann es sich beispielsweise um ein Sicherheitsmodul handeln, mit dessen Hilfe asymmetrische und/oder symmetrische Verschlüsselungs- / Entschlüsselungs-Prozeduren durchführbar sind. Insbesondere wenn ein Teil des Netzwerks als UMTS-Netz ausgebildet ist und einzelne Einheiten als Mobiltelefone ausgebildet sind, weisen diese Mobiltelefone Mittel zur intelligenten Verschlüsselung/Entschlüsselung von übertragenen Daten auf.

In weiterer Ausgestaltung kann die Transaktions-Gebereinheit und/oder die Transaktions-Nehmereinheit eine Anzeigeeinrichtung zur visuellen Darstellung von Informationen aufweisen. Hierbei kann es sich beispielsweise um ein geeignetes Interface, beispielsweise einen Bildschirm, einen Touch-Screen, oder dergleichen handeln.

Schließlich kann auch vorgesehen sein, dass die Transaktions-Gebereinheit Signalmittel aufweist und dass die Signalmittel zur Kenntlichmachung einer direkten Kommunikation zwischen der Transaktions-Gebereinheit und der Transaktions-Nehmereinheit ausgebildet sind. Auf diese Weise kann dem Nutzer einer Transaktions-Nehmereinheit von der Transaktions-Gebereinheit signalisiert werden, wenn eine direkte Kommunikationsverbindung zwischen der Transaktions-Nehmereinheit und der Transaktions-Gebereinheit hergestellt worden ist. Dazu können die Signalmittel beispielsweise zur Erzeugung optischer oder akustischer Signale ausgebildet sein. Optische Signale können beispielsweise mittels einer Lampe, mittels Darstellung von Textanzeigen und dergleichen erzeugt werden.

Ein bevorzugtes System, mittels dessen das erfindungsgemäße Verfahren durchführbar ist, weist beispielsweise eine Rechnereinheit auf, die über folgende Merkmale verfügt: A) genügend Ressourcen, um ein Echtzeitbetriebssystem (Real Time Operating System-RTOS) zu betreiben, B) zu gewährleisten, dass das RTOS in der Lage ist, ein Kommunikationsmodul zu unterstützen, das wiederum das Internetprotokoll IPv6 unterstützt, C) eine Lokalisierungsmöglichkeit, beispielsweise in Form eines GPS-Receivers (Global Position Satelite Receiver), der in der oder den Einheit(en) integriert ist, D) ein Kommunikationsmodul, das insbesondere den drahtlosen Zugang zum Internet ermöglicht, E) ein Sicherheitsmodul, welches asymmetrische und/oder symmetrische Verschlüsselungs-/ Entschlüsselungs-Prozeduren unterstützt, F) eine Anzeigeeinrichtung zur Darstellung des Transaktionsfortgangs, beispielsweise zur Darstellung von dessen Abbruch, dessen Bestätigung oder dessen Zurückstellung, G) Programmmittel in Form einer Applikation, die es ermöglichen, in die Protokollstandards für den World Wide Web-Zugang umzuwandeln, H) Programmmittel, die eine JAVA-Virtual-Machine implementieren.

Das erfindungsgemäße Verfahren sowie das erfindungsgemäße System sind insbesondere deshalb besonders vorteilhaft einsetzbar, weil die folgenden Komponenten in dem Netzwerk beziehungsweise den Transaktions-Nehmereinheiten und Transaktions-Gebereinheiten verwirklicht sind. Zunächst ist ein flexibles IP-Adressschema für alle Teilnehmer vorhanden. Dieses Adressschema enthält die dynamische Erzeugung von global ansteuerbaren IP-Adressen, eine genügende Anzahl von IP-Adressen für alle beteiligten Einheiten sowie ein einfaches automatischen Routing sowie integrierte Sicherheitskonzepte.

Weiterhin ist eine dynamische Entscheidung der Transaktions-Gebereinheit für eine Transaktions-Nehmereinheit, die sich in deren Umgebung befindet, möglich. Das bedeutet, dass auch in solchen Fällen, in denen sich mehrere Transaktions-Gebereinheiten in der näheren Umgebung einer Transaktions-Nehmereinheit befinden, über die Transaktions-Nehmereinheit immer eindeutig feststellbar ist, mit welcher der Transaktions-Gebereinheiten die direkte Kommunikationsverbindung aufgebaut worden ist.

Weiterhin wird es mit der vorliegenden Erfindung möglich, eine direkte, sichere Kommunikationsverbindung zwischen den Transaktions-Gebereinheiten und den Transaktions-Nehmereinheiten aufzubauen, ohne dass es der Interaktion eines Content-Servers oder eines Service-Providers bedarf.

Darüber hinaus ist es für den Nutzer der Transaktions-Nehmereinheit nicht erforderlich, in einen extensiven Dialog mit der Transaktions-Gebereinheit zu treten, was bisher nicht selten mit einer komplexen Abfolge von einzelnen Handhabungsschritten einherging.

Schließlich wird es nunmehr auf besonders einfache Weise möglich, die übertragenen Transaktionsdaten zu Authentifizieren und zu Verifizieren.

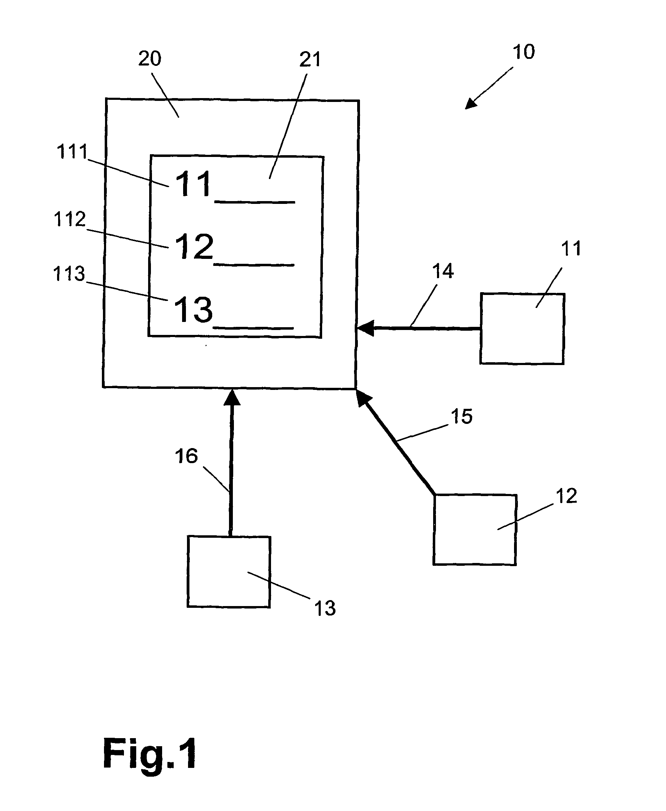

Nachfolgend wird die Erfindung anhand eines konkreten Ausführungsbeispiels unter Bezugnahme auf die beiliegenden Zeichnungen näher erläutert. Dabei stellen die Figuren 1 bis 3 den prinzipiellen Verfahrensablauf einer Transaktion gemäß der vorliegenden Erfindung innerhalb eines erfindungsgemäßen Systems dar.

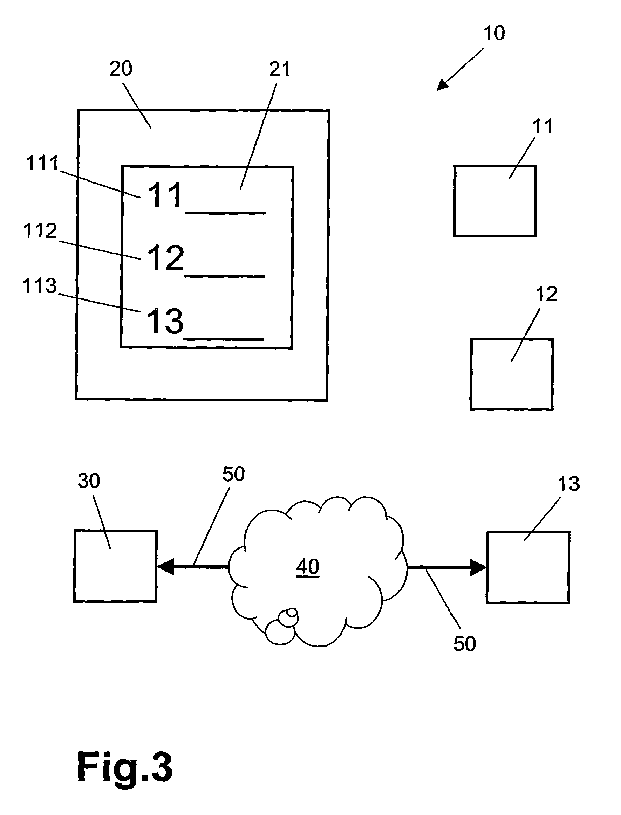

Das Ausführungsbeispiel betrifft eine Transaktion zwischen einer als Mobiltelefon ausgebildeten Transaktions-Nehmereinheit 30 und einer automatisierten anonymen Einheit, bei der es sich um eine Transaktions-Gebereinheit 11, 12, 13 handelt, beispielsweise einen Verkaufsautomaten. Die Transaktion soll in einem System 10 stattfindet, welches unter anderem ein Netzwerk aufweist. Dabei wird ein Teil des Netzwerks durch das Internet 40 gebildet (Figur 3). Eine andere Komponente des Netzwerks wird durch ein Mobilfunknetz gebildet, beispielsweise das UMTS-Netz. Die Transaktion soll darin bestehen, dass über die Transaktions-Nehmereinheit 30 Waren oder Dienstleistungen, im vorliegenden Beispiel Waren, von der Transaktions-Gebereinheit 11, 12, 13 bezogen werden.

Gemäß der vorliegenden Erfindung ist es nunmehr möglich, dass das Mobiltelefon 30 (Transaktions-Nehmereinheit) und der Verkaufsautomat 13 (Transaktions-Gebereinheit) direkt über das Internet 40 miteinander kommunizieren (Figur 3), um die Bedingungen für die Transaktion festzulegen, bestehend aus dem Verkauf und der Bezahlung eines bestimmten Postens aus dem Verkaufsautomaten 13. Dazu ist es gemäß der Erfindung möglich, dass das Mobiltelefon 30 mit dem Internet 40 über eine statische, global anwählbare Adresse verbunden werden kann. Ebenso kann der Verkaufsautomat 13 mit einer statischen, global anwählbaren Adresse mit dem Internet 40 verbunden werden. Das Mobiltelefon 30 hat die Fähigkeit, die Adresse des Verkaufsautomaten 13 zu bestimmen. Weiterhin hat der Verkaufsautomat 13 die Möglichkeit, die vom Mobiltelefon 30 übertragenen Transaktionsdaten zu authentifizieren beziehungsweise authentifizieren zu lassen.

Um die Transaktion durchführen zu können, kann die als Verkaufsautomat ausgebildete Transaktions-Gebereinheit 13 zusätzlich mit geeigneten Mitteln ausgestattet sein, mittels derer die über die Transaktions-Nehmereinheit 30 (das Mobiltelefon) ausgewählte Ware auch körperlich übergeben werden kann. Hierbei kann es sich beispielsweise um geeignete Programmmittel handeln, die innerhalb des Verkaufsautomaten 13 implementiert sind. Weiterhin kann der Verkaufsautomat 13 über mechanische und elektronische Aktuatoren, Schaltungen, Schaltungsbestandteile und dergleichen verfügen, die insbesondere unter der Kontrolle einer Recheneinheit und der Programmmittel stehen und die dazu dienen, die ausgewählte Ware an einen Ausgabepunkt des Verkaufsautomaten 13 zu transportieren und an diesem auszugeben.

Weiterhin kann die Transaktions-Nehmereinheit 30 mit einem geeigneten Interface ausgestattet sein, beispielsweise einem Touch-Screen, einem Keypad oder dergleichen. Über dieses Interface wird es dem Nutzer der Transaktions-Nehmereinheit 30 ermöglicht, die Transaktion zu beginnen, zu bestätigen, zurückzusetzen oder abzubrechen.

Um einen solchen Transaktionsdienst anzubieten, muss zunächst dafür Sorge getragen werden, dass die Transaktions-Gebereinheiten 11, 12, 13 mit einer statischen, global adressierbaren Internetadresse, beispielsweise einer IPv6-Adresse, verknüpft werden (Figur 1). Die Internetadressen werden anschließend mit den tatsächlichen geographischen Koordinaten der Transaktions-Gebereinheiten 11, 12, 13 verknüpft, die über ein Standort-Ermittlungsverfahren ermittelt werden. Die Gesamtheit dieser Daten bildet die Transaktions-Geberdatei 111, 112, 113. Diese Internetadresse (IPv6-Adresse) sowie die Positionsdaten bestimmen die Transaktions-Gebereinheit 11, 12, 13 eindeutig. Diese Information (die Transaktions-Geberdatei 111, 112, 113) wird in einer Zentraldatei 21 abgespeichert.

Im vorliegenden Beispiel gemäß Figur 1 werden die Transaktions-Geberdateien 111, 112, 113 zunächst in den Transaktions-Gebereinheiten 11, 12, 13 erzeugt und anschließend auf die zentrale Rechnereinheit 20, die Bestandteil des Systems 10 ist, übertragen, was durch die Pfeile 14, 15 und 16 gekennzeichnet ist. Ebenso ist es denkbar, dass die Transaktions-Geberdateien 111, 112, 113 innerhalb der zentralen Rechnereinheit 20 erzeugt werden.

Der Netzwerkbetreiber kann die Transaktions-Gebereinheit 11, 12, 13 mit einer Anwendungs-Spezifikation für die bestimmte Plattform versorgen, auf der die Transaktions-Gebereinheit 11, 12, 13 läuft. Diese Spezifikation kann beispielsweise vorsehen, dass die Applikation als A) WWW-Server läuft, der eine HTML-Seite zur Verfügung stellt, auf der die Auswahlmöglichkeiten für den Transaktions-Nehmer dargestellt sind. Weiterhin muss zunächst der Zusammenhang von der angeforderten Ware und der Manipulation der Transaktions-Gebereinheit 11, 12, 13 festgelegt werden, damit diese Ware geliefert werden kann. B) Weiterhin kann die Applikation als ein bestimmter IP-Service ablaufen, der ein bestimmtes Protokoll verwendet, um die Transaktion durchzuführen.

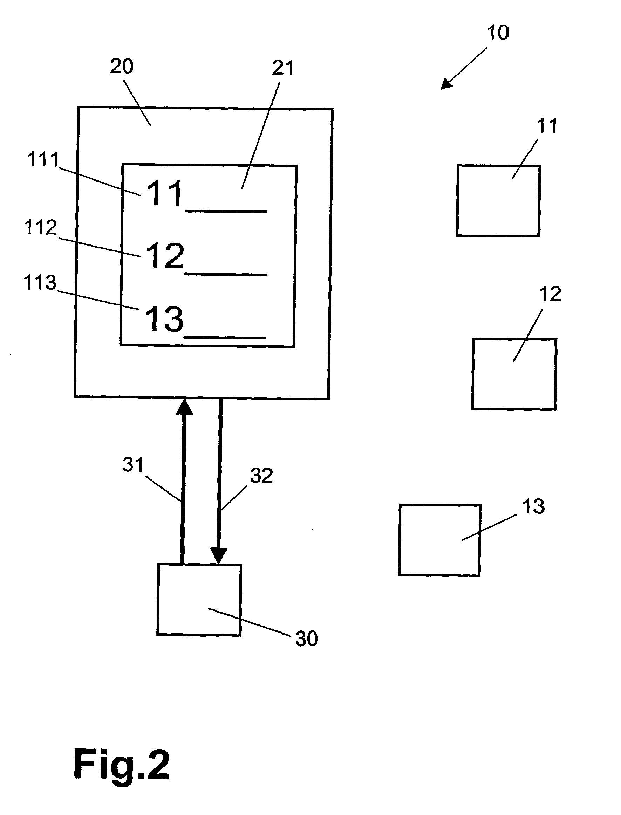

Zur Durchführung einer Transaktion wird gemäß Figur 2 zunächst die Position der für die Durchführung von Transaktionen zugelassenen Transaktions-Nehmereinheit 30 bestimmt. Die auf diese Weise ermittelten Positionsdaten können entsprechenden Programmmitteln zur Verfügung gestellt werden, über die eine Lokalisierung der Transaktions-Gebereinheiten 11, 12, 13 in die Wege geleitet werden kann. Diese Programmmittel können beispielsweise in der Transaktions-Nehmereinheit 30 abgelegt sein. Wenn der Nutzer einer Transaktions-Nehmereinheit 30 eine Transaktion mit einer Transaktions-Gebereinheit 11, 12, 13 starten möchte, kann eine entsprechende, auf der aktuellen Position der Transaktions-Nehmereinheit 30 basierende Anfrage an eine zentrale Rechnereinheit 20 übertragen werden, was durch den Pfeil 31 verdeutlicht ist. Bei dieser zentralen Rechnereinheit 20 kann es sich beispielsweise um einen WWW-Server handeln, der vom Netzbetreiber bereitgehalten und betrieben wird. In der zentralen Rechnereinheit 20 werden die Positionsdaten der Transaktions-Nehmereinheit 30 mit Positionsdaten von Transaktions-Gebereinheiten 11, 12, 13 verglichen. Sofern sich eine vorgegebene Übereinstimmung einstellt, sei es, dass die Positionsdaten übereinstimmen oder aber dass die Positionsdaten der Transaktions-Gebereinheiten 11, 12, 13 in einem festgelegten Umkreis zu den Positionsdaten der Transaktions-Nehmereinheit 30 liegen, werden die Adressdaten solcher Transaktions-Gebereinheiten, im vorliegenden Beispiel die Adressdaten der Transaktions-Gebereinheit 13, auf die Transaktions-Nehmereinheit 30 übertragen. Dabei können all diejenigen Transaktions-Gebereinheiten 13 dargestellt werden, die sich in einem bestimmten Radius um die Transaktions-Nehmereinheit 30 herum befinden. Die zentrale Rechnereinheit 20, beispielsweise der WWW-Server, überträgt die entsprechenden Informationen anschließend auf die Transaktions-Nehmereinheit 30, was durch den Pfeil 32 verdeutlicht ist. Dies kann beispielsweise mittels einer Webseite mit HTML-Links zu solchen Rechnereinheiten erfolgen, die sich in den Transaktions-Gebereinheiten 13 innerhalb eines bestimmten Radius um die Transaktions-Nehmereinheit 30 herum befinden. Ebenso ist es denkbar, dass in der Transaktions-Nehmereinheit 30 bestimmte JAVA-Applikationen heruntergeladen werden, die unter dem Protokoll der in dem bestimmten Radius befindlichen Transaktions-Gebereinheit(en) 13 laufen.

In jedem Fall wird erreicht, dass ein direkter Zugang zu der/den Transaktions-Gebereinheit 13 ermöglicht wird, entweder durch den WWW-Browser oder die JAVA-Applikation. Dies geschieht mittels der global zugänglichen Internetadresse, beispielsweise der IPv6-Adresse, der Transaktions-Gebereinheit 13.

Im Falle eines Web-Browser-Interface wird der Nutzer auf seiner Transaktions-Nehmereinheit 30 die Internetadresse (URL) derjenigen Transaktions-Gebereinheit 13 aktivieren, von welcher er Waren oder Dienstleistungen beziehen möchte. Die Transaktions-Gebereinheit 13 wird über das Internet 40 direkt kontaktiert, dargestellt durch die Kommunikationsverbindung 50, und überträgt Informationsdaten, beispielsweise in Form einer Webseite, an die Transaktions-Nehmereinheit 30 (siehe Figur 3). Diese Informationsdaten enthalten die zur Verfügung stehende Auswahl an Waren, die Preise sowie jegliche andere Informationen, die erforderlich sind, um die Transaktion durchzuführen. Im Fall einer JAVA-Applikation aktiviert der Nutzer der Transaktions-Nehmereinheit 30 diese Applikation und die für die Transaktion erforderlichen Informationsdaten werden in Übereinstimmung mit den Spezifikationen des Protokolls der Transaktions-Gebereinheit 13 auf der Transaktions-Nehmereinheit 30 präsentiert.

Ein optisches Signalmittel, beispielsweise eine LED-Anzeige oder ein hintergrundbeleuchtetes Textanzeigefeld oder dergleichen kann vorteilhaft bei der Transaktions-Gebereinheit 13 aktiviert werden, um dem Nutzer anzuzeigen, dass seine Transaktions-Nehmereinheit 30 auch tatsächlich mit der gewünschten Transaktions-Gebereinheit 13 kommuniziert. Über die Transaktions-Nehmereinheit 30 kann nun die eigentliche Transaktionsphase eingeleitet und durchgeführt werden, indem beispielsweise eine entsprechende Auswahl von Waren vorgenommen und anschließend bestätigt wird, dass auch tatsächlich der Wunsch zur Fortführung der Transaktion besteht. Dies kann beispielsweise durch Betätigung entsprechender Tasten eines Keypads, durch Berührung bestimmter Flächen auf einem Touch-Screen und dergleichen erfolgen.

Sobald die Auswahlprozedur beendet worden ist, wird in der Transaktions-Gebereinheit 13 vorzugsweise automatisch der zu bezahlende Kaufpreis ermittelt und anschließend dem Nutzer der Transaktions-Nehmereinheit 30 zur Kenntnis gebracht. Dies kann beispielsweise durch Übertragung auf die Transaktions-Nehmereinheit 30 und/oder durch Anzeige auf einer entsprechenden Anzeigeeinrichtung der Transaktions-Gebereinheit 13 erfolgen. Die Bestätigung dieses Preises startet eine Verifizierungsprozedur. Zunächst fragt die Transaktions-Gebereinheit 13 dazu eine Autorisierung der Transaktions-Nehmereinheit 30 zur Entgegennahme der ausgewählten Waren ab. Diese Anfrage kann beispielsweise eine Internetadresse, etwa eine IPv6-Adresse von solch einer Akzeptierungs-Instanz enthalten, die den Bezahlvorgang durchführt und überwacht. Die Transaktions-Nehmereinheit 30 erzeugt elektronisch eine solche Autorisierung über den zu entrichtenden Kaufpreis. Diese Autorisierung kann zum Zwecke der Verschlüsselung mit dem privaten Schlüssel der Transaktions-Nehmereinheit 30 signiert werden und wird anschließend zu einer Authentifizierungsinstanz übertragen, wo die Integrität der Autorisierung verifiziert wird. Der dafür verwendete Schlüssel kann zu einem früheren Zeitpunkt erzeugt und dem Nutzer der Transaktions-Nehmereinheit 30 zur Verfügung gestellt werden, indem dieser beispielsweise in der Transaktions-Nehmereinheit 30 implementiert wird.

Die Autorisierung zum Eintreiben des ausstehenden Geldbetrags kann gleichzeitig auch die Internetadresse der Transaktions-Gebereinheit 13 enthalten. Nach Überprüfung der Informationen überträgt die Authentifizierungsinstanz entsprechende Informationsdaten an die Transaktions-Gebereinheit 13, damit diese die ausgewählten Waren ausgeben kann. Die Transaktions-Gebereinheit 13 überträgt eine Kaufquittung an die Transaktions-Nehmereinheit 30, die mit dem privaten Schlüssel der Transaktions-Gebereinheit signiert sein kann. Eine Kopie dieser Quittungsdatei wird an die Akzeptierungs-Instanz übertragen, die die Auswahlautorisierung mit dem Kaufnachweis korreliert und automatisch eine Kaufabrechnung erzeugt.

Die Art und Weise, wie die Transaktion durchgeführt wird, ist ein Implementierungsdetail, dass sich je nach Art und Beschaffenheit der angebotenen Waren oder Services ergibt. Vorteilhaft kann die Akzeptierungs-Instanz und/oder die Authentifizierungsinstanz auch Bestandteil der zentralen Rechnereinheit 20 sein.

## Patentansprüche

1. Verfahren zum Durchführen von Transaktionen zwischen Einheiten in einem Netzwerk, wobei zumindest ein Bestandteil des Netzwerks durch das Internet gebildet wird und wobei wenigstens eine Einheit als Transaktions-Gebereinheit und wenigstens eine Einheit als Transaktions-Nehmereinheit ausgebildet ist,
**dadurch gekennzeichnet,**
**dass** über das Netzwerk eine direkte Kommunikation zwischen der Transaktions-Gebereinheit (11, 12, 13) und der Transaktions-Nehmereinheit (30) erfolgt;
**dass** zu diesem Zweck über ein Standort-Ermittlungsverfahren Positionsdaten der Transaktions-Gebereinheit (11, 12, 13) automatisch erzeugt und elektronisch mit der Transaktions-Gebereinheit (11, 12, 13) eindeutig zugeordneten Adressdaten, die zumindest eine Internetadresse umfassen, zu einer die Transaktions-Gebereinheit (11, 12, 13) eindeutig identifizierenden Transaktions-Geberdatei (111, 112, 113) verknüpft werden;
**dass** die Transaktions-Geberdateien (111, 112, 113) aller Transaktions-Gebereinheiten (11, 12, 13) elektronisch in einer Zentraldatei (21) abgespeichert werden;
**dass** zur Einleitung einer Transaktion über ein Standort-Ermittlungsverfahren Positionsdaten der Transaktions-Nehmereinheit (30) automatisch erzeugt werden;
**dass** die Positionsdaten der Transaktions-Nehmereinheit (30) elektronisch mit den Transaktions-Geberdateien (111, 112, 113) aus der Zentraldatei (21) verglichen werden;
**dass** die Adressdaten einer oder mehrerer Transaktions-Gebereinheit(en) (13), die eine Übereinstimmung ihrer Positionsdaten mit den Positionsdaten der Transaktions-Nehmereinheit (30) aufweist/aufweisen oder sich zumindest in einem definierten Umgebungsbereich zur Position der Transaktions-Nehmereinheit (30) befindet/befinden, automatisch über die Transaktions-Nehmereinheit (30) aktiviert wird/werden; und
**dass** bei Aktivierung von Adressdaten einer Transaktions-Gebereinheit (13) in der Transaktions-Nehmereinheit (30) zur Durchführung einer Transaktion über das Netzwerk automatisch eine direkte Kommunikationsverbindung (50) zwischen der Transaktions-Gebereinheit (13) und der Transaktions-Nehmereinheit (30) hergestellt wird.

2. Verfahren nach Anspruch 1, **dadurch gekennzeichnet, dass** die Adressdaten einer oder mehrerer Transaktions-Gebereinheit(en) (13), die eine Übereinstimmung ihrer Positionsdaten mit den Positionsdaten der Transaktions-Nehmereinheit (30) aufweist/aufweisen oder sich zumindest in einem definierten Umgebungsbereich zur Position der Transaktions-Nehmereinheit (30) befindet/befinden, automatisch auf der Transaktions-Nehmereinheit (30) angezeigt wird/werden.

3. Verfahren nach Anspruch 2, **dadurch gekennzeichnet, dass** das Netzwerk wenigstens eine zentrale Rechnereinheit (20) aufweist, dass die Zentraldatei (21) in der zentralen Rechnereinheit (20) abgespeichert wird, dass die Positionsdaten der Transaktions-Nehmereinheit (30) zur zentralen Rechnereinheit (20) übertragen (31) und dort elektronisch mit den Transaktions-Geberdateien (111, 112, 113) aus der Zentraldatei (21) verglichen werden und dass die Adressdaten solcher Transaktions-Gebereinheiten (13), die eine Übereinstimmung ihrer Positionsdaten mit den Positionsdaten der Transaktions-Nehmereinheit (30) aufweisen oder sich zumindest in einem definierten Umgebungsbereich zur Position der Transaktions-Nehmereinheit (30) befinden, automatisch auf die Transaktions-Nehmereinheit (30) übertragen (32) und dort angezeigt werden.

4. Verfahren nach Anspruch 2, **dadurch gekennzeichnet, dass** die Zentraldatei (21) in einer Rechnereinheit innerhalb der Transaktions-Nehmereinheit (30) abgespeichert wird, dass die Positionsdaten der Transaktions-Nehmereinheit (30) in der Rechnereinheit mit den Transaktions-Geberdateien (111, 112, 113) aus der Zentraldatei (21) verglichen werden und dass die Adressdaten solcher Transaktions-Gebereinheiten (13), die eine Übereinstimmung ihrer Positionsdaten mit den Positionsdaten der Transaktions-Nehmereinheit (30) aufweisen oder sich zumindest in einem definierten Umgebungsbereich zur Position der Transaktions-Nehmereinheit (30) befinden, automatisch auf der Transaktions-Nehmereinheit (30) angezeigt werden.

5. Verfahren nach einem der Ansprüche 1 bis 4, **dadurch gekennzeichnet, dass** der Transaktions-Nehmereinheit (30) Adressdaten eindeutig zugeordnet sind und dass nach Herstellung einer direkten Kommunikationsverbindung (50) Informationsdaten von der Transaktions-Gebereinheit (13) automatisch an die Adressdaten der Transaktions-Nehmereinheit (30 übertragen werden.

6. Verfahren nach Anspruch 5, **dadurch gekennzeichnet, dass** die Informationsdaten von der Transaktions-Gebereinheit (13) in Form einer Webseite auf die Transaktions-Nehmereinheit (30) übertragen werden.

7. Verfahren nach einem der Ansprüche 1 bis 6, **dadurch gekennzeichnet, dass** die Adressdaten solcher Transaktions-Gebereinheiten (13), die eine Übereinstimmung ihrer Positionsdaten mit den Positionsdaten der Transaktions-Nehmereinheit (30) aufweisen oder sich zumindest in einem definierten Umgebungsbereich zur Position der Transaktions-Nehmereinheit (30) befinden, in Form einer Webseite auf der Transaktions-Nehmereinheit (30) angezeigt werden.

8. Verfahren nach einem der Ansprüche 5 bis 7, **dadurch gekennzeichnet, dass** die Adressdaten der Transaktions-Nehmereinheit (30) eine Internetadresse umfassen.

9. Verfahren nach einem der Ansprüche 1 bis 8, **dadurch gekennzeichnet, dass** die von den Adressdaten der Transaktions-Gebereinheit (11, 12, 13) und/oder der Transaktions-Nehmereinheit (30) umfassten Internetadressen als Internetadressen nach dem IPv6-Standard ausgebildet sind.

10. Verfahren nach einem der Ansprüche 1 bis 9, **dadurch gekennzeichnet, dass** die Transaktions-Gebereinheit (11, 12, 13) und/oder die Transaktions-Nehmereinheit (30) Mittel zum Verschlüsseln und/oder Entschlüsseln von Daten aufweist und dass während einer Kommunikationsprozedur zwischen der Transaktions-Gebereinheit (13) und der Transaktions-Nehmereinheit (30) zumindest Teile von Transaktionsdaten zumindest zeitweilig verschlüsselt übertragen werden.

11. Verfahren nach einem der Ansprüche 1 bis 10, **dadurch gekennzeichnet, dass** von der Transaktions-Nehmereinheit (30) und/oder von der Transaktions-Gebereinheit (11, 12, 13) erzeugte Transaktionsdaten innerhalb einer Authentifizierungsinstanz elektronisch verifiziert werden.

12. Verfahren nach Anspruch 11, **dadurch gekennzeichnet, dass** die Authentifizierungsinstanz Bestandteil des Netzwerks ist, dass die Transaktionsdaten von der Transaktions-Nehmereinheit (30) über das Netzwerk an die Authentifizierungsinstanz übertragen und dort verifiziert werden und dass die verifizierten Transaktionsdaten von der Authentifizierungsinstanz anschließend zur Transaktions-Gebereinheit (13) übertragen werden.

13. Verfahren nach Anspruch 11, **dadurch gekennzeichnet, dass** die Authentifizierungsinstanz Bestandteil der Transaktions-Gebereinheit (13) ist und dass die Transaktionsdaten von der Transaktions-Nehmereinheit (30) über das Netzwerk an die Authentifizierungsinstanz übertragen und dort verifiziert werden.

14. Verfahren nach einem der Ansprüche 1 bis 13, **dadurch gekennzeichnet, dass** es sich bei einem Bestandteil des Netzwerks um ein Mobilfunknetz, insbesondere das UMTS-Netz, handelt und das zumindest einzelne Schritte des Transaktionsverfahrens über das Mobilfunknetz ablaufen.

15. System zum Durchführen von Transaktionen zwischen Einheiten in einem Netzwerk, wobei zumindest ein Bestandteil des Netzwerks durch das Internet (40) gebildet ist und wobei wenigstens eine Einheit als Transaktions-Gebereinheit (11, 12, 13)und wenigstens eine Einheit als Transaktions-Nehmereinheit (30) ausgebildet ist, **dadurch gekennzeichnet, dass** das System (10) Mittel zur Durchführung des Verfahrens nach einem der Ansprüche 1 bis 14 aufweist.

16. System nach Anspruch 15, **dadurch gekennzeichnet, dass** ein Bestandteil des Netzwerks als Mobilfunknetz, insbesondere als UMTS-Netz, ausgebildet ist.

17. System nach Anspruch 15 oder 16, **dadurch gekennzeichnet, dass** zumindest eine Transaktions-Gebereinheit (11, 12, 13) als stationäre Einheit ausgebildet ist.

18. System nach einem der Ansprüche 15 bis 17, **dadurch gekennzeichnet, dass** zumindest eine Transaktions-Nehmereinheit (30) als mobile Einheit ausgebildet ist.

19. System nach einem der Ansprüche 15 bis 18, **dadurch gekennzeichnet, dass** das Netzwerk wenigstens eine zentrale Rechnereinheit (20) aufweist.

20. System nach einem der Ansprüche 15 bis 19, **dadurch gekennzeichnet, dass** die Transaktions-Nehmereinheit (30) und/oder die Transaktions-Gebereinheit (11, 12, 13) eine Rechnereinheit aufweisen.

21. System nach einem der Ansprüche 15 bis 20, **dadurch gekennzeichnet, dass** die Transaktions-Nehmereinheit (30) und/oder die Transaktions-Gebereinheit (11, 12, 13) Mittel zur Ortsbestimmung der Einheit aufweist.

22. System nach Anspruch 21, **dadurch gekennzeichnet, dass** die Mittel zur Ortsbestimmung ein terrestrisches Modul und/oder ein Funk-Modul umfassen.

23. System nach Anspruch 19, **dadurch gekennzeichnet, dass** die zentrale Rechnereinheit (20) Mittel zur Ortsbestimmung der Transaktions-Nehmereinheit (30) und/oder der Transaktions-Gebereinheit (11, 12, 13) aufweist.

24. System nach einem der Ansprüche 15 bis 23, **dadurch gekennzeichnet, dass** die Transaktions-Gebereinheit (11, 12, 13) und die Transaktions-Nehmereinheit (30) Mittel aufweisen, die das Internetprotokoll IPv6 unterstützen.

25. System nach einem der Ansprüche 15 bis 24, **dadurch gekennzeichnet, dass** die Transaktions-Gebereinheit (11, 12, 13) und die Transaktions-Nehmereinheit (30) jeweils ein Kommunikationsmodul aufweisen, das für einen direkten Zugang zum Internet (40) ausgebildet ist.

26. System nach einem der Ansprüche 15 bis 25, **dadurch gekennzeichnet, dass** im Netzwerk wenigstens eine Authentifizierungsinstanz vorgesehen ist und dass die Authentifizierungsinstanz zum Verifizieren von übertragenen Transaktionsdaten ausgebildet ist.

27. System nach Anspruch 26, **dadurch gekennzeichnet, dass** die Authentifizierungsinstanz im Netzwerk als eigenständiges Bauteil ausgebildet ist.

28. System nach Anspruch 26, **dadurch gekennzeichnet, dass** die Authentifizierungsinstanz als Bestandteil der Transaktions-Nehmereinheit (30) und/oder der Transaktions-Gebereinheit (11, 12, 13) ausgebildet ist.

29. System nach einem der Ansprüche 15 bis 28, **dadurch gekennzeichnet, dass** die Transaktions-Gebereinheit (11, 12, 13) und die Transaktions-Nehmereinheit (30) Mittel zum Verschlüsseln und/oder Entschlüsseln von Daten aufweisen.

30. System nach einem der Ansprüche 15 bis 29, **dadurch gekennzeichnet, dass** die Transaktions-Gebereinheit (11, 12, 13) und/oder die Transaktions-Nehmereinheit (30) eine Anzeigeeinrichtung zur visuellen Darstellung von Informationen aufweist.

31. System nach einem der Ansprüche 15 bis 30, **dadurch gekennzeichnet, dass** die Transaktions-Gebereinheit (11, 12, 13) Signalmittel aufweist und dass die Signalmittel zur Kenntlichmachung einer direkten Kommunikation zwischen der Transaktions-Gebereinheit (11, 12, 13) und der Transaktions-Nehmereinheit (30) ausgebildet sind.

## Claims

1. A process for carrying out transactions between units in a network, at least one component of the network being formed by the Internet and at least one unit taking the form of a transaction sender unit and at least one unit taking the form of a transaction receiver unit, **characterized**
**in that** a direct communication between the transaction sender unit (11, 12, 13) and the transaction receiver unit (30) occurs via the network;
**in that**, for this purpose, via a position locating method, positional data of the transaction sender unit (11, 12, 13) are automatically produced and are electronically linked to address data assigned uniquely to the transaction sender unit (11, 12, 13), said address data comprising at least one Internet address, to create a transaction sender file (111, 112, 113) that uniquely identifies the transaction sender unit (11, 12, 13);
**in that** the transaction sender files (111, 112, 113) of all transaction sender units (11, 12, 13) are electronically stored in a central file (21);
**in that**, for initiation of a transaction, positional data of the transaction receiver unit (30) are automatically produced via a position locating method;
**in that** the positional data of the transaction receiver unit (30) are electronically compared with the transaction sender files (111, 112, 113) from the central file (21);
**in that** the address data of one or more transaction sender unit(s) (13), that exhibits/exhibit agreement of its or their positional data with the positional data of the transaction receiver unit (30) or at least is/are located in a defined surrounding area in relation to the position of the transaction receiver unit (30) is/are automatically activated via the transaction receiver unit (30); and
**in that**, when the address data of a transaction sender unit (13) are activated in the transaction receiver unit (30) for carrying out a transaction via the network, a direct communications link (50) between the transaction sender unit (13) and the transaction receiver unit (30) is automatically made.

2. The process according to claim 1, further **characterized in that** the address data of one or more transaction sender unit(s) (13) that exhibits/exhibit agreement of its/their positional data with the positional data of the transaction receiver unit (30) or at least is/are located in a defined surrounding area in relation to the position of the transaction receiver unit (30), is/are automatically displayed on the transaction receiver unit (30).

3. The process according to claim 2, further **characterized in that** the network has at least one central computing unit (20), that the central file (21) is stored in the central computing unit (20), that the positional data of the transaction receiver unit (30) are transmitted to the central computing unit (20) and electronically compared there with the transaction sender files (111, 112, 113) from the central file (21), and that the address data of those transaction sender units (13) that exhibit agreement of their positional data with the positional data of the transaction receiver unit (30) or at least are located in a defined surrounding area in relation to the position of the transaction receiver unit (30), are automatically transmitted (32) to the transaction receiver unit (30) and displayed there.

4. The process according to claim 2, further **characterized in that** the central file (21) is stored in a computing unit within the transaction receiver unit (30), that the positional data of the transaction receiver unit (30) are compared with the transaction sender files (111, 112, 113) from the central file (21) in the computing unit (21), and that the address data of those transaction sender units (13) that exhibit agreement of their positional data with the positional data of the transaction receiver unit (30) or at least are located in a defined surrounding area in relation to the position of the transaction receiver unit (30), are automatically displayed on the transaction receiver unit (30).

5. The process according to anyone of claims 1 to 4, further **characterized in that** address data are assigned uniquely to the transaction receiver unit (30) and that, after a direct communications link (50) has been created, information data of the transaction sender unit (13) are automatically transmitted to the address data of the transaction receiver unit (30).

6. The process according to claim 5, further **characterized in that** the information data are transmitted from the transaction sender unit (13) to the transaction receiver unit (30) in the form of a website.

7. The process according to anyone of claims 1 to 6, further **characterized in that** the address data of those transaction sender units (13) that exhibit agreement of their positional data with the positional data of the transaction receiver unit (30) or at least are located in a defined surrounding area in relation to the position of the transaction receiver unit (30) are displayed on the transaction receiver unit (30) in the form of a website.

8. The process according to anyone of claims 5 to 7, further **characterized in that** the address data of the transaction receiver unit (30) comprise an Internet address.

9. The process according to anyone of claims 1 to 8, further **characterized in that** the Internet addresses comprised by the address data of the transaction sender unit (11, 12, 13) and/or the transaction receiver unit (30) take the form of Internet addresses according to the IPv6 standard.

10. The process according to anyone of claims 1 to 9, further **characterized in that** the transaction sender unit (11, 12, 13) and/or the transaction receiver unit (30) has a means for encrypting and/or decrypting data and that, during a communication procedure between the transaction sender unit (13) and the transaction receiver unit (30), at least portions of the transaction data are transmitted at least temporarily encrypted.

11. The process according to anyone of claims 1 to 10, further **characterized in that** transaction data produced by the transaction receiver unit (30) and/or by the transaction sender unit (11, 12, 13) are electronically verified within an authentication instance.

12. The process according to claim 11, further **characterized in that** the authentication instance is a component of the network, **in that** the transaction data are transmitted from the transaction receiver unit (30) via the network to the authentication instance and are verified there, and that the verified transaction data are transmitted subsequently from the authentication instance to the transaction receiver unit (13).

13. The process according to claim 11, further **characterized in that** the authentication instance is a component of the transaction sender unit (13) and that the transaction data are transmitted from the transaction receiver unit (30) via the network to the authentication instance and are verified there.

14. The process according to anyone of claims 1 to 13, further **characterized in that** one component of the network involves a mobile wireless network, in particular the UMTS network, and **in that** at least individual steps of the transaction process proceed via the mobile wireless network.

15. A system for carrying out transactions between units in a network, at least one component of the network being formed by the Internet (40) and at least one unit taking the form of a transaction sender unit (11, 12, 13) and at least one unit taking the form of a transaction receiver unit (30), **characterized in that** the system (10) has means for carrying out the process according to anyone of claims 1 to 14.

16. The system according to claim 15, further **characterized in that** a component of the network takes the form of a mobile wireless network, in particular a UMTS network.

17. The system according to claim 15 or 16, further **characterized in that** at least one transaction sender unit (11, 12, 13) takes the form of a stationary unit.

18. The system according to anyone of claims 15 to 17, further **characterized in that** at least one transaction receiver unit (30) takes the form of a mobile unit.

19. The system according to anyone of claims 15 to 18, further **characterized in that** the network has at least one central computing unit (20).

20. The system according to anyone of claims 15 to 19, further **characterized in that** the transaction receiver unit (30) and/or the transaction sender unit (11, 12, 13) has a computing unit.

21. The system according to anyone of claims 15 to 20, further **characterized in that** the transaction receiver unit (30) and/or the transaction sender unit (11, 12, 13) has means for positional location of the unit.

22. The system according to claim 21, further **characterized in that** the means for positional location comprise a terrestrial module and/or a wireless module.

23. The system according to claim 19, further **characterized in that** the central computing unit (20) has means for positional location of the transaction receiver unit (30) and/or of the transaction sender unit (11, 12, 13).

24. The system according to anyone of claims 15 to 23, further **characterized in that** the transaction sender unit (11, 12, 13) and the transaction receiver unit (30) have means that support the IPv6 Internet protocol.

25. The system according to anyone of claims 15 to 24, further **characterized in that** the transaction sender unit (11, 12, 13) and the transaction receiver unit (30) each have a communications module that is designed for a direct access to the Internet (40).

26. The system according to anyone of claims 15 to 25, further **characterized in that** at least one authentication instance is provided in the network and that the authentication instance is designed for verification of the transmitted transaction data.

27. The system according to claim 26, further **characterized in that** the authentication instance is designed as an independent component in the network.

28. The system according to claim 26, further **characterized in that** the authentication instance is designed as a component of the transaction receiver unit (30) and/or the transaction sender unit (11, 12, 13).

29. The system according to anyone of claims 15 to 28, further **characterized in that** the transaction sender unit (11, 12, 13) and the transaction receiver unit (30) have means for encrypting and/or decrypting data.

30. The system according to anyone of claims 15 to 29, further **characterized in that** the transaction sender unit (11, 12, 13) and/or the transaction receiver unit (30) have a display device for the visual representation of information.

31. The system according to anyone of claims 15 to 30, further **characterized in that** the transaction sender unit (11, 12, 13) has signal means and that the signal means are designed for making known a direct communication between the transaction sender unit (11, 12, 13) and the transaction receiver unit (30).

## Revendications

1. Procédé pour exécuter des transactions entre des unités dans un réseau, au moins un élément constitutif du réseau étant formé par l'Internet et au moins une unité étant conçue en tant qu'unité émettrice de transaction et au moins une unité en tant qu'unité réceptrice de transaction, **caractérisé en ce que**
par le biais du réseau, a lieu une communication directe entre l'unité émettrice de transaction (11, 12, 13) et l'unité réceptrice de transaction (30) ;
dans ce but, par le biais d'un procédé de localisation, des données de position de l'unité émettrice de transaction (11, 12, 13) sont produites automatiquement et sont combinées par voie électronique à des données d'adresse, qui sont associées sans ambiguïté à l'unité émettrice de transaction (11, 12, 13) et qui comprennent au moins une adresse Internet, en un fichier d'émetteur de transaction (111, 112, 113) identifiant sans ambiguïté l'unité émettrice de transaction (11, 12, 13) ;
les fichiers d'émetteur de transaction (111, 112, 113) de toutes les unités émettrices de transaction (11, 12, 13) sont stockés par voie électronique dans un fichier central (21) ;
pour mener une transaction par le biais d'un procédé de localisation, des données de position de l'unité réceptrice de transaction (30) sont produites automatiquement ;
les données de position de l'unité réceptrice de transaction (30) sont comparées par voie électronique aux fichiers d'émetteur de transaction (111, 112, 113) du fichier central (21) ;
les données d'adresse d'une ou plusieurs unité(s) émettrice(s) de transaction (13), qui présente/présentent une concordance de leurs données de position avec les données de position de l'unité réceptrice de transaction (30) ou qui se trouve/trouvent au moins dans une zone voisine définie par rapport à la position de l'unité réceptrice de transaction (30), est/sont automatiquement activée(s) par le biais de l'unité réceptrice de transaction (30) ; et
lors de l'activation des données d'adresse d'une unité émettrice de transaction (13) dans l'unité réceptrice de transaction (30) pour l'exécution d'une transaction par le biais du réseau, une liaison de communication directe (50) entre l'unité émettrice de transaction (13) et l'unité réceptrice de transaction (30) est établie automatiquement.

2. Procédé selon la revendication 1, **caractérisé en ce que** les données d'adresse d'une ou de plusieurs unité(s) émettrice(s) de transaction (13), qui présente/présentent une concordance de leurs données de position avec les données de position de l'unité réceptrice de transaction (30) ou qui se trouve/trouvent au moins dans une zone voisine définie par rapport à la position de l'unité réceptrice de transaction (30), est/sont affichée(s) automatiquement sur l'unité réceptrice de transaction (30).

3. Procédé selon la revendication 2, **caractérisé en ce que** le réseau comporte au moins une unité de calcul centrale (20), **en ce que** le fichier central (21) est stocké dans l'unité de calcul centrale (20), **en ce que** les données de position de l'unité réceptrice de transaction (30) sont transmises (31) à l'unité de calcul centrale (20) et y sont comparées par voie électronique aux fichiers d'émetteur de transaction (111, 112, 113) du fichier central (21) et **en ce que** les données d'adresse de telles unités émettrices de transaction (13), qui présentent une concordance de leurs données de position avec les données de position de l'unité réceptrice de transaction (30) ou se trouvent au moins dans une zone voisine définie par rapport à la position de l'unité réceptrice de transaction (30), sont transmises (32) automatiquement à l'unité réceptrice de transaction (30) et y sont affichées.

4. Procédé selon la revendication 2, **caractérisé en ce que** le fichier central (21) est stocké dans une unité de calcul à l'intérieur de l'unité réceptrice de transaction (30), **en ce que** les données de position de l'unité réceptrice de transaction (30) dans l'unité de calcul sont comparées aux fichiers d'émetteur de transaction (111, 112, 113) du fichier central (21) et **en ce que** les données d'adresse de telles unités émettrices de transaction (13), qui présentent une concordance de leurs données de position avec les données de position de l'unité réceptrice de transaction (30) ou se trouvent au moins dans une zone voisine définie par rapport à la position de l'unité réceptrice de transaction (30), sont affichées automatiquement sur l'unité réceptrice de transaction (30).

5. Procédé selon l'une quelconque des revendications 1 à 4, **caractérisé en ce que** des données d'adresse sont attribuées sans ambiguïté à l'unité réceptrice de transaction (30) et **en ce que**, après l'établissement d'une liaison de communication directe (50), des données d'informations de l'unité émettrice de transaction (13) sont transmises automatiquement aux données d'adresse de l'unité réceptrice de transaction (30).

6. Procédé selon la revendication 5, **caractérisé en ce que** les données d'informations de l'unité émettrice de transaction (13) sont transmises sous forme d'une page Web à l'unité réceptrice de transaction (30).

7. Procédé selon l'une quelconque des revendications 1 à 6, **caractérisé en ce que** les données d'adresse de telles unités émettrices de transaction (13), qui présentent une concordance de leurs données de position avec les données de position de l'unité réceptrice de transaction (30) ou qui se trouvent au moins dans une zone voisine définie par rapport à la position de l'unité réceptrice de transaction (30), sont affichées sous forme d'une page Web sur l'unité réceptrice de transaction (30).

8. Procédé selon l'une quelconque des revendications 5 à 7, **caractérisé en ce que** les données d'adresse de l'unité réceptrice de transaction (30) comprennent une adresse Internet.

9. Procédé selon l'une quelconque des revendications 1 à 8, **caractérisé en ce que** les adresses Internet, comprises dans les données d'adresse de l'unité émettrice de transaction (11, 12, 13) et/ou de l'unité réceptrice de transaction (30), sont conçues en tant qu'adresses Internet selon le standard IPv6.

10. Procédé selon l'une quelconque des revendications 1 à 9, **caractérisé en ce que** l'unité émettrice de transaction (11, 12, 13) et/ou l'unité réceptrice de transaction (30) comporte(nt) des moyens pour chiffrer et/ou déchiffrer des données et **en ce que**, durant une procédure de communication entre l'unité émettrice de transaction (13) et l'unité réceptrice de transaction (30), au moins des parties des données de transaction sont chiffrées au moins temporairement.

11. Procédé selon l'une quelconque des revendications 1 à 10, **caractérisé en ce que** des données de transaction produites par l'unité réceptrice de transaction (30) et/ou par l'unité émettrice de transaction (11, 12, 13) sont vérifiées par voie électronique au sein d'une instance d'authentification.

12. Procédé selon la revendication 11, **caractérisé en ce que** l'instance d'authentification est un élément constitutif du réseau, **en ce que** les données de transaction sont transmises par l'unité réceptrice de transaction (30) par le biais du réseau à l'instance d'authentification et y sont vérifiées et **en ce que** les données de transaction vérifiées sont transmises par l'instance d'authentification ensuite à l'unité émettrice de transaction (13).

13. Procédé selon la revendication 11, **caractérisé en ce que** l'instance d'authentification est un élément constitutif de l'unité émettrice de transaction (13) et **en ce que** les données de transaction sont transmises par l'unité réceptrice de transaction (30) par le biais du réseau à l'instance d'authentification et y sont vérifiées.

14. Procédé selon l'une quelconque des revendications 1 à 13, **caractérisé en ce qu'**il s'agit, quant à l'élément constitutif du réseau, d'un réseau de radiocommunication mobile, en particulier du réseau UMTS, et **en ce qu'**au moins certaines étapes du procédé de transaction se déroulent par le biais du réseau de radiocommunication mobile.

15. Système d'exécution de transactions entre des unités dans un réseau, au moins un élément constitutif du réseau étant formé par l'Internet (40) et au moins une unité étant conçue en tant qu'unité émettrice de transaction (11, 12, 13) et au moins une unité en tant qu'unité réceptrice de transaction (30), **caractérisé en ce que** le système (10) comporte des moyens pour exécuter le procédé selon l'une quelconque des revendications 1 à 14.

16. Système selon la revendication 15, **caractérisé en ce qu'**un élément constitutif du réseau est conçu en tant que réseau de radiocommunication mobile, en particulier en tant que réseau UMTS.

17. Système selon la revendication 15 ou 16, **caractérisé en ce qu'**au moins une unité émettrice de transaction (11, 12, 13) est conçue en tant qu'unité stationnaire.

18. Système selon l'une quelconque des revendications 15 à 17, **caractérisé en ce qu'**au moins une unité réceptrice de transaction (30) est conçue en tant qu'unité mobile.

19. Système selon l'une quelconque des revendications 15 à 18, **caractérisé en ce que** le réseau comporte au moins une unité de calcul centrale (20).

20. Système selon l'une quelconque des revendications 15 à 19, **caractérisé en ce que** l'unité réceptrice de transaction (30) et/ou l'unité émettrice de transaction (11, 12, 13) comporte (nt) une unité de calcul.

21. Système selon l'une quelconque des revendications 15 à 20, **caractérisé en ce que** l'unité réceptrice de transaction (30) et/ou l'unité émettrice de transaction (11, 12, 13) comportent des moyens de localisation de l'unité.

22. Système selon la revendication 21, **caractérisé en ce que** les moyens de localisation comprennent un module terrestre et/ou un module de radiocommunication.

23. Système selon la revendication 19, **caractérisé en ce que** l'unité de calcul centrale (20) comporte des moyens de localisation de l'unité réceptrice de transaction (30) et/ou de l'unité émettrice de transaction (11, 12, 13).

24. Système selon l'une quelconque des revendications 15 à 23, **caractérisé en ce que** l'unité émettrice de transaction (11, 12, 13) et l'unité réceptrice de transaction (30) comportent des moyens qui prennent en charge le protocole Internet IPv6.

25. Système selon l'une quelconque des revendications 15 à 24, **caractérisé en ce que** l'unité émettrice de transaction (11, 12, 13) et l'unité réceptrice de transaction (30) comportent chacune un module de communication qui est conçu pour un accès direct à l'Internet (40).

26. Système selon l'une quelconque des revendications 15 à 25, **caractérisé en ce qu'**il est prévu dans le réseau au moins une instance d'authentification et **en ce que** l'instance d'authentification est conçue pour la vérification des données de transaction transmises.

27. Système selon la revendication 26, **caractérisé en ce que** l'instance d'authentification est configurée sur le réseau en tant que composant indépendant.

28. Système selon la revendication 26, **caractérisé en ce que** l'instance d'authentification est conçue en tant qu'élément constitutif de l'unité réceptrice de transaction (30) et/ou de l'unité émettrice de transaction (11, 12, 13).

29. Système selon l'une quelconque des revendications 15 à 28, **caractérisé en ce que** l'unité émettrice de transaction (11, 12, 13) et l'unité réceptrice de transaction (30) comportent des moyens de chiffrement et/ou de déchiffrement de données.

30. Système selon l'une quelconque des revendications 15 à 29, **caractérisé en ce que** l'unité émettrice de transaction (11, 12, 13) et/ou l'unité réceptrice de transaction (30) comportent un dispositif d'affichage pour la représentation visuelle d'informations.

31. Système selon l'une quelconque des revendications 15 à 30, **caractérisé en ce que** l'unité émettrice de transaction (11, 12, 13) comporte des moyens de signalisation et que les moyens de signalisation sont conçus pour rendre reconnaissable une communication directe entre l'unité émettrice de transaction (11, 12, 13) et l'unité réceptrice de transaction (30).
